# FASCICULE DE BREVET EUROPEEN

(11) **EP 3 919 776 B1**
(45) Date de publication et mention de la délivrance du brevet: **19.11.2025**
(21) Numéro de dépôt: 21175718.2
(22) Date de dépôt: 25.05.2021
(51) Int. Cl.: F16H 1/06, F16H 1/04, F16H 57/00, B60K 5/00, F02B 67/06

(54) **DISPOSITIF À DOUBLE ROUES DENTÉES POUR GROUPE MOTOPROPULSEUR**
VORRICHTUG MIT DOPPELTEN ZAHNRÄDERN FÜR MOTORANTRIEBSANLAGE
DEVICE WITH DOUBLE TOOTHED WHEEL FOR A POWER TRAIN

(30) Priorité: 05.06.2020 FR 2005912
(43) Date de publication de la demande: 08.12.2021
(73) Titulaire: Horse Powertrain Solutions, S.L.U., 28108 Alcobendas Madrid (ES)
(72) Inventeur: MILLON, Jean-Pierre, 78870 Bailly (FR); GRATIAN, Jean-Louis, 95120 ERMONT (FR)
(74) Mandataire: Elzaburu S.L.P.

(56) Documents cités:
- EP-A1- 3 486 524
- DE-A1- 102018 116 318
- FR-A1- 2 850 906
- FR-B1- 2 850 906
- JP-A- 2017 035 929

## Description

La présente invention se rapporte au domaine des groupes motopropulseurs pour véhicule, et porte plus particulièrement sur les roues dentées des cascades de roues dentées de tels groupes motopropulseurs. Un dispositif de l'art antérieur est divulgué dans JP 2017 035929 A.

Un tel groupe motopropulseur comprend notamment un moteur thermique et une machine électrique. Plus particulièrement, le moteur thermique comprend classiquement un système de distribution chargé de synchroniser la rotation d'un vilebrequin avec un arbre à cames du moteur thermique. Ce système de distribution est aussi conçu pour entrainer en rotation certains accessoires du moteur thermique, tel qu'un compresseur de climatisation. La machine électrique est installée de telle sorte à transmettre son effort, et ce selon la fonction qu'elle occupe, en passant par une pignonnerie reliée au vilebrequin du moteur thermique. Selon ce montage, la pignonnerie reliant la machine électrique au vilebrequin du moteur thermique s'étend dans un plan parallèle à un plan d'extension du système de distribution du moteur thermique.

Un tel montage impose un grand nombre de roues dentées qui doivent être soutenues chacun par un arbre fixé sur le groupe motopropulseur. Un tel groupe motopropulseur présente donc un encombrement mécanique important, ce qui représente un premier inconvénient de l'art antérieur.

Une autre difficulté survient quand il s'agit de positionner les alésages chargés de recevoir les arbres porteurs des roues dentées du système de distribution ou de la pignonnerie. En effet, le nombre d'alésage étant important, il devient impossible de les positionner sans que ceux-ci soient en interférence avec un autre composant du groupe motopropulseur.

La présente invention permet de pallier ces problèmes en proposant un dispositif à double roues dentées comme dans la rev. 1.

Le fait d'intégrer un dispositif à double roues dentées garantit la rotation d'au moins deux roues dentées autour d'un seul et même arbre et ainsi de limiter le nombre d'arbres à fixer sur le groupe motopropulseur. La présence du dispositif à double roues dentées réduit donc l'encombrement mécanique lié à une pluralité d'engrenages.

La première roue dentée et la deuxième roue dentée sont des roues dentées disposées l'une à côté de l'autre et montées sur le même arbre. Chacune des roues dentées fait partie d'une cascade de roues dentées qui lui est propre. Ainsi la première roue dentée peut faire partie d'une première cascade de roues dentées et la deuxième roue dentée peut faire partie d'une deuxième cascade de roues dentées. Chacune des roues dentées est entraînée par une roue dentée menante et peut également entraîner une autre roue dentée. De ce fait, les dents des roues dentées coopèrent par complémentarité de forme. L'arbre qui maintient le dispositif à double roues dentées est fixe, chacune des roues dentées étant entraînée en rotation autour dudit arbre. L'arbre est centré sur l'axe de rotation autour duquel les roues dentées tournent.

Le premier moyeu est entraîné en rotation par la première roue dentée et tourne autour de l'arbre. Il remplit ainsi la fonction de maintien de la première roue dentée. Par ailleurs, le premier moyeu est en contact direct avec le premier palier de rotation qui est interposé entre l'arbre et le premier moyeu.

La première roue dentée et le moyeu peuvent être des pièces distinctes liées l'une à l'autre postérieurement à leur fabrication. La liaison peut par exemple se faire par soudage ou frettage. Alternativement, la première roue dentée et le premier moyeu peuvent être une seule et unique pièce massique. La première roue dentée et le premier moyeu sont alors indissociables l'un de l'autre sans destruction de l'un et/ou de l'autre. Les deux alternatives évoquées ici sont également transposables à la deuxième roue dentée et au deuxième moyeu.

Le premier palier de rotation permet au premier moyeu, et donc à la première roue dentée, d'être entraînés en rotation autour de l'arbre.

Le premier palier de rotation est un organe qui autorise une rotation sans usure de la première roue dentée et du premier moyeu par rapport à l'arbre. Il en va de même pour le deuxième palier de rotation avec la deuxième roue dentée et le deuxième moyeu. Chacune des roues dentées, et le moyeu respectif sur lequel ces dernières sont montées ont leur propre moyen de rotation.

Comme cela a été dit précédemment, la première roue dentée et la deuxième roue dentée sont entraînées en rotation, chacune grâce à son palier de rotation respectif. Ainsi, la vitesse de rotation de la première roue dentée peut différer de la vitesse de rotation de la deuxième roue dentée. Chacune des roues dentées est donc adaptée à une vitesse d'entraînement de la cascade de roues dentées à laquelle elle appartient. Contrairement au premier palier de rotation, le deuxième palier de rotation n'est pas en contact direct avec l'arbre. Le deuxième palier de rotation prend appui sur le premier moyeu. Pour cela, le premier moyeu peut s'étendre de manière à traverser un trou central de la deuxième roue dentée et à être en regard de celle-ci, radialement. Le premier moyeu est alors au contact à la fois du premier palier de rotation et du deuxième palier de rotation.

Le fait de disposer le deuxième palier de rotation entre les deux moyeux, et non entre l'arbre et le deuxième moyeu, permet d'augmenter la surface de contact entre chaque moyeu et leur palier de rotation respectif tout en garantissant la rotation des deux moyeux. Augmenter la surface de contact entre le moyeu et le palier de rotation garantit une meilleure stabilité du premier moyeu et/ou du deuxième moyeu respectivement lorsque la première roue dentée et/ou la deuxième roue dentée sont entraînées en rotation. La deuxième roue dentée est ainsi entraînée en rotation autour du premier moyeu.

Selon l'invention, le premier moyeu est pourvu d'une première portion axiale portant la première roue dentée et d'une deuxième portion axiale porteuse du deuxième moyeu.

La première portion axiale correspond à la portion du premier moyeu au contact de la première roue dentée et porte cette dernière. La fixation peut être diverse tant que cela n'empêche ni la rotation de la première roue dentée, ni celle du premier moyeu.

La deuxième portion axiale est quant à elle au contact direct du premier palier de rotation. Ce dernier est donc interposé entre l'arbre et le premier moyeu, contre la première portion axiale et/ou contre la deuxième portion axiale.

La deuxième portion axiale s'étend le long de l'arbre afin d'être disposée en regard avec la deuxième roue dentée et de porter cette dernière, plus particulièrement de porter le deuxième moyeu. Ce dernier est donc entraîné en rotation autour de la deuxième portion axiale du premier moyeu.

Selon une caractéristique de l'invention, le dispositif à double roues dentées comprend une première butée axiale disposée entre le premier moyeu et l'arbre. En plus d'être en appui sur le premier palier de rotation, le premier moyeu est également en appui axialement sur la première butée axiale. Cette dernière permet un blocage selon la direction axiale de l'arbre, tout en autorisant une rotation autour de l'arbre par la première roue dentée. D'une manière générale, la première butée axiale permet au premier moyeu, et par analogie à la première roue dentée, de rester immobile axialement par rapport à l'arbre et garantir son alignement par rapport aux autres roues dentées de la cascade de roues dentées.

Selon une caractéristique de l'invention, le deuxième moyeu comprend un premier secteur axial portant la deuxième roue dentée et un deuxième secteur axial en butée axiale contre l'arbre par l'intermédiaire d'une deuxième butée axiale. Le deuxième moyeu présente une fonction identique à celle du premier moyeu. Le deuxième moyeu est ainsi apte à tourner autour de l'arbre tout en maintenant mécaniquement la deuxième roue dentée.

Le premier secteur axial et le deuxième secteur axial du deuxième moyeu sont les pendants de la première portion axiale et de la deuxième portion axiale du premier moyeu. Autrement dit, le premier secteur axial porte la deuxième roue dentée, tandis que le deuxième secteur axial garantit le blocage axial du deuxième moyeu par rapport à l'arbre.

Tout comme pour le premier moyeu, le deuxième moyeu est bloqué axialement à l'aide d'une butée axiale. La deuxième butée axiale empêche ainsi le désaxement de la deuxième roue dentée par rapport à sa cascade de roues dentées en assurant un blocage selon la direction axiale de l'arbre, et ce tout en autorisant une rotation autour de l'arbre par la deuxième roue dentée. Il s'agit là d'un exemple de réalisation de la deuxième butée axiale, mais il est également possible par exemple que la deuxième butée axiale puisse garantir le blocage axial du deuxième moyeu par rapport au premier moyeu.

Selon une caractéristique de l'invention, la première butée axiale et/ou la deuxième butée axiale est par exemple un roulement à billes. Chacun des roulements à billes sont disposés autour de l'arbre, et les moyeux respectifs viennent prendre appui dessus. Le fait d'utiliser un roulement à billes comme butée axiale permet une rotation optimale de chacun des moyeux, tout en maintenant mécaniquement ceux-ci et donc en leur empêchant d'effectuer une translation le long de l'axe de rotation.

Selon une caractéristique de l'invention, le premier palier de rotation et/ou le deuxième palier de rotation est un roulement à aiguilles ou à rouleaux. Le roulement comprend au moins une bague externe et au moins une bague interne entre lesquelles est disposée une pluralité d'aiguilles ou de rouleaux.

Selon une caractéristique de l'invention, les diamètres de la première roue dentée et de la deuxième roue dentée sont identiques à +/- 2%. Alternativement, les roues dentées peuvent présenter une différence de taille l'une par rapport à l'autre. Les roues dentées pouvant tourner de manière indépendante l'une par rapport à l'autre, le fait qu'elles aient un diamètre potentiellement différent n'influe pas sur leur fonctionnement.

L'invention couvre également un groupe motopropulseur d'un véhicule, comprenant une machine électrique et un moteur thermique, le moteur thermique comprenant au moins un vilebrequin, le groupe motopropulseur comprenant une première cascade de roues dentées reliant la machine électrique au vilebrequin et une deuxième cascade de roues dentées reliant au moins un organe de distribution au vilebrequin, caractérisé en ce qu'il comprend un dispositif à double roues dentées selon l'une quelconque des caractéristiques listées dans le présent document, ledit dispositif à double roues dentées étant constitutif de la première cascade de roues dentées et de la deuxième cascade de roues dentées.

Selon un aspect, le dispositif à double roues dentées autorise un décalage de vitesse de rotation entre la première cascade de roues dentées et la deuxième cascade de roues dentées.

A titre d'exemple, la machine électrique peut consister en un moteur électrique ou une génératrice électrique. Dans le cas d'un moteur électrique, la machine électrique peut être un démarreur du moteur thermique. Dans le cas d'une génératrice électrique, la machine électrique peut être un alternateur du moteur thermique. Il peut également s'agir d'une combinaison de ces moyens, la machine électrique étant alors un alterno-démarreur.

Au sein d'un tel groupe motopropulseur, chacun des moteurs peut fonctionner en alternance l'un par rapport à l'autre ou en support de l'autre. Les moteurs peuvent également être actifs ou inactifs. Le moteur thermique, de par son activité, permet par exemple le rechargement de la batterie via une utilisation du moteur électrique en tant que génératrice. Dans cette situation, une force de rotation est générée par le vilebrequin du moteur thermique et est transmise à travers les deux cascades de roues dentées, notamment à travers la première cascade de roues dentées, au moteur électrique afin de permettre un chargement de la batterie qui équipe le véhicule et qui alimente le moteur électrique.

D'une manière générale, la machine électrique peut également générer une force de rotation permettant de mettre en mouvement le véhicule ou simplement de procéder au démarrage de celui-ci. Cette force de rotation est ainsi transmise le long de la première cascade de roues dentées pour générer le déplacement ou le démarrage du véhicule, et le long de la deuxième cascade de roues dentées pour entrainer en rotation certain accessoires.

Le vilebrequin est relié à une poulie de vilebrequin qui est disposée au sein de la deuxième cascade de roues dentées. La poulie de vilebrequin, entraînée par le vilebrequin, est la poulie menante de l'ensemble de la deuxième cascade de roues dentées.

La première cascade de roues dentées peut par exemple comprendre un engrenage principal. Cet engrenage principal est adjacent et au contact de la poulie de vilebrequin. La liaison entre le vilebrequin et l'engrenage principale permet la mise en rotation des deux pièces de manière simultanée. Autrement dit, lorsque la poulie de vilebrequin ou l'engrenage principal tourne, il entraîne nécessairement et respectivement l'engrenage principal ou la poulie de vilebrequin en rotation et à une vitesse identique, ou sensiblement identique. Au sein d'un tel groupe motopropulseur, cela permet à l'ensemble des deux cascades de roues dentées d'être entraîné en rotation. Ainsi, lorsque seul le moteur thermique ou la machine électrique délivre son couple, la première cascade de roues dentées et la deuxième cascade de roues dentées sont toutes deux entraînés en rotation, assurant l'ensemble des fonctionnalités du véhicule. C'est ainsi que la force de rotation peut être transmise de la première cascade de roues dentées à la deuxième cascade de roues dentées, ou inversement.

Le dispositif à double roues dentées peut avantageusement être disposé de manière à être en contact directement et simultanément avec la poulie de vilebrequin et avec l'engrenage principal. A titre d'exemple, la première roue dentée du dispositif à double roues dentées peut être engrenée avec l'engrenage principal et donc faire partie de la première cascade de roues dentées, tandis que la deuxième roue dentée du dispositif à double roues dentées peut engrener la poulie de vilebrequin et faire partie de la deuxième cascade de roues dentées. Ainsi, chacune des roues dentées du dispositif à double roues dentées fait partie intégrante de sa propre cascade de roues dentées.

L'utilisation d'un dispositif à double roues dentées garantit la suppression d'un arbre de l'une ou l'autre des cascades de roues dentées et donc diminue l'encombrement mécanique du groupe motopropulseur lié au nombre d'arbres fixés à celui-ci.

Selon une caractéristique de l'invention, la machine électrique peut être un démarreur et/ou un alternateur du moteur thermique. Autrement dit, la machine électrique assure la fonction de démarreur en initiant un rotation du vilebrequin, ce qui permet la mise en fonctionnement du moteur thermique. La mise en rotation est ainsi initiée par la machine électrique et se transmet via la première cascade de roues dentées jusqu'à l'engrenage principal. Ce dernier entraîne la poulie de vilebrequin et le vilebrequin afin de lancer le fonctionnement du moteur thermique.

Une fois le moteur thermique mis en fonctionnement, c'est ce dernier qui assure seul la propulsion du véhicule. La deuxième cascade de roues dentées entraîne alors la première cascade de roues dentées et la machine électrique assure la fonction d'alternateur. Par le biais de la mise en rotation de la première cascade de roues dentées, la machine électrique génère de l'énergie afin par exemple de recharger la batterie du véhicule. Cette machine électrique peut bien entendu combiner la fonction de démarreur et la fonction d'alternateur, et il s'agira dans ce cas d'un alterno-démarreur.

Selon une caractéristique de l'invention, le dispositif à double roues dentées autorise un décalage de vitesse de rotation entre la première cascade de roues dentées et la deuxième cascade de roues dentées. Par décalage de vitesse, il faut comprendre que le dispositif à double roues dentées autorise une rotation relative de la seconde roue dentée par rapport à la première roue dentée, laquelle est montée mobile en rotation par rapport à l'arbre qui soutient le dispositif. Ainsi, les deux roues dentées sont aptes à tourner librement autour de l'arbre, chacune des roues dentées engrenant dans la cascade de roues dentées qui lui est propre et ce de manière indépendante l'une par rapport à l'autre.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue en perspective d'un dispositif à double roues dentées selon l'invention,
[fig 2] est une vue en coupe du dispositif à double roues dentées,
[fig 3] est un schéma représentant l'intégration du dispositif à double roues dentées au sein d'un groupe motopropulseur illustré de manière schématique.

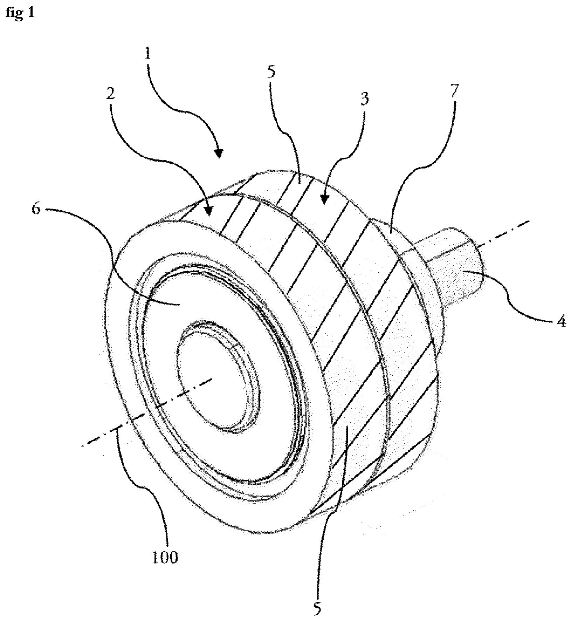

La figure 1 représente un dispositif à double roues dentées 1 selon l'invention, disposé au sein d'un groupe motopropulseur d'un véhicule. Le dispositif à double roues dentées 1 comprend une première roue dentée 2 et une deuxième roue dentée 3 mises en place autour d'un arbre 4. La première roue dentée 2 et la deuxième roue dentée 3 sont disposées à une extrémité de l'arbre 4, tandis que l'autre extrémité de l'arbre 4, représentée libre sur la figure 1, est configurée pour être fixée sur un moteur thermique du véhicule, notamment par vissage dans un carter moteur. L'arbre 4 est centré autour d'un axe de rotation 100. Ce dernier est également l'axe autour duquel tourne la première roue dentée 2 et la deuxième roue dentée 3.

Le dispositif à double roues dentées 1 propose deux roues dentées mobiles en rotation autour d'un seul arbre 4, chacune des deux roues dentées étant engrenée dans une cascade de roue dentées indépendante. Il en résulte un gain de place au niveau du moteur par rapport à deux roues dentées montées autour de deux arbres indépendants l'un de l'autre, chacune étant disposée autour d'un arbre 4 qui lui est propre. Le dispositif à double roues dentées 1 permet donc de supprimer une connexion entre le moteur thermique et un arbre 4.

Chacune des roues dentées représentés sur la figure 1 se présente sous la forme d'une roue comprenant une pluralité de dents 5. Les dents 5 coopèrent par complémentarité de forme avec des dents d'autres roues dentées interagissant avec la première roue dentée 2 ou avec la deuxième roue dentée 3. C'est la complémentarité de forme entre les dents des roues dentées qui permet une transmission d'un mouvement de rotation d'une roue dentée à une autre. Ainsi, la première roue dentée 2 et la deuxième roue dentée 3 interagissent avec au moins une autre roue dentée, ou plus généralement un autre élément incluant des dents tel qu'un engrenage ou un pignon.

Tel que cela est visible sur la figure 1, la première roue dentée 2 est disposée autour d'un premier moyeu 6. Ce dernier assure le maintien mécanique de la première roue dentée 2 tout en permettant la rotation de cette dernière. Lorsque la première roue dentée 2 est entraînée en rotation, le moyeu 6 est également entraîné en rotation par la première roue dentée 2. La rotation du premier moyeu 6 est en phase avec celle de la première roue dentée 2 étant donné que le premier moyeu 6 porte la première roue dentée 2 et est solidaire en rotation avec ladite première roue dentée 2.

La deuxième roue dentée 3 comprend un deuxième moyeu 7. Tout comme l'interaction entre la première roue dentée 2 et le premier moyeu 6, le deuxième moyeu 7 porte la deuxième roue dentée 3. Le deuxième moyeu 7 est solidaire en rotation avec la deuxième roue dentée 3 et tourne en phase avec cette dernière. Tel que cela sera décrit en détails par la suite, le premier moyeu 6 et le deuxième moyeu 7 peuvent s'étendre le long de l'arbre 4 au-delà de l'épaisseur respectivement de la première roue dentée 2 et de la deuxième roue dentée 3, tel que cela est visible sur la figure 1 concernant la deuxième roue dentée 3 et le deuxième moyeu 7. Dit autrement, la longueur d'un moyeu, mesurée le long de l'axe de rotation 100, est supérieure à une épaisseur de la roue dentée portée par ce moyeu, mesurée le long du même axe.

La première roue dentée 2 et la deuxième roue dentée 3 comprennent un anneau périphérique portant une denture tenue par des rayons ou un disque qui s'étend depuis le moyeu respectif de chacune des roues dentées. Ledit moyeu selon l'invention présente une dimension axiale suffisante pour assurer le maintien de l'axe de chacune des roues dentées confondu avec l'axe de l'arbre et garantir la stabilité en fonctionnement de la roue dentée. La longueur axiale de chacun des moyeux est supérieure à la longueur axiale des roues dentées auquel sont rattachés lesdits moyeux. Chacun des moyeux est conformé pour entourer l'arbre 4.

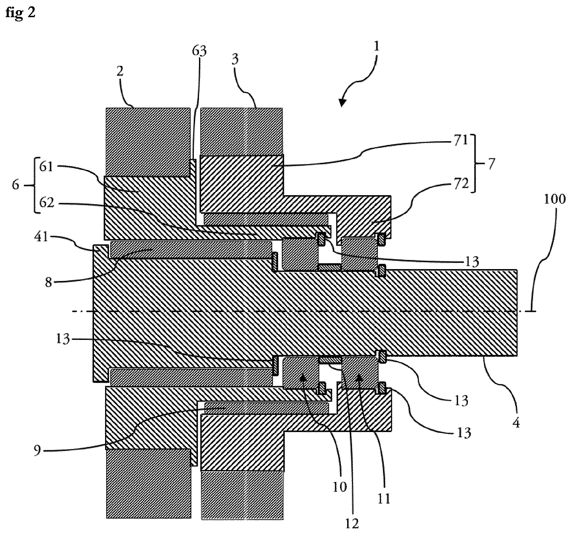

La figure 2 est une vue en coupe du dispositif à double roues dentées 1. La coupe est effectuée selon un plan passant par l'axe de rotation 100 illustré sur la figure 1. L'ensemble des pièces visibles sur la figure 2 s'étendant de manière circulaire autour de l'arbre 4, une telle vue en coupe illustre symétriquement les pièces constitutives du dispositif à double roues dentées 1. Ainsi, il est évident que les parties de la figure 2 symétriques entre elles par rapport à l'axe de rotation 100 sont des parties correspondant à une seule et même pièce du dispositif à double roues dentées 1. Ces parties sont de révolution autour de l'axe de rotation 100.

Tel que cela a été décrit en figure 1, les moyeux assurent simultanément leur fonction de maintien de leur roue dentée respective et leur fonction de mise en rotation autour de l'arbre. Les roues dentées et moyeux sont montées mobiles en rotation, et notamment libres, par rapport à l'arbre 4, autour de l'axe de rotation 100, l'arbre 4 étant fixe et solidaire du carter du moteur.

Le premier moyeu 6 est divisé en une première portion axiale 61 et une deuxième portion axiale 62. La première portion axiale 61 est en contact direct avec la première roue dentée 2 et a pour fonction de porter celle-ci. A ce titre, la première portion axiale 61 peut présenter une extension radiale 63 qui longe au moins partiellement un flanc latéral de la première roue dentée 2 et ainsi de former une butée de positionnement de la première roue dentée 2 par rapport au premier moyeu 6. La fixation entre la première roue dentée 2 et la première portion axiale 61 du premier moyeu 6 peut par exemple se faire par soudage ou frettage, mais toute autre moyen de fixation est envisageable tant que ce dernier relie solidairement la première roue dentée 2 avec le premier moyeu 6.

La deuxième portion axiale 62 du premier moyeu 6 est située radialement entre l'arbre 4 et la deuxième roue dentée 3, de sorte à ce que le deuxième moyeu 7 puisse être entraîné en rotation autour de la deuxième portion axiale 62 du premier moyeu 6.

La première portion axiale 61 et la deuxième portion axiale 62 sont en contact avec un premier palier de rotation 8. Le premier palier de rotation 8 est donc interposé entre l'arbre 4 et le premier moyeu 6. Le premier palier de rotation 8 s'étend de manière circonférentielle autour de l'arbre 4 et peut par exemple être un roulement à aiguilles ou à rouleaux. Une bague externe du roulement est au contact d'un alésage interne du premier moyeu 6 et une bague interne du roulement est en contact d'une circonférence externe de l'arbre 4, et plusieurs rouleaux ou aiguilles sont disposés radialement entre la bague interne et la bague externe du roulement. Ainsi, le premier moyeu 6, plus particulièrement la première portion axiale 61 et la deuxième portion axiale 62, lorsque la première roue dentée 2 l'entraîne en rotation, roule sur les aiguilles ou les rouleaux du roulement qui constitue un exemple du premier palier de rotation 8. Ledit roulement est arrêté axialement par une première bague qui peut être logée dans un alésage interne creusé dans la paroi intérieure cylindrique du premier moyeu 6 et une seconde bague logée dans un alésage creusé dans la surface externe de l'arbre 4.

Le premier moyeu 6 est monté reposant sur le premier palier de rotation 8 dont la longueur axiale est suffisante pour assurer la stabilité de la première roue dentée 2 dans sa rotation autour de l'arbre 4. Le premier moyeu 6 présente alors une longueur axiale supérieure à la longueur axiale du premier palier de rotation 8 et est conformé pour recouvrir entièrement ledit premier palier de rotation 8. Selon la figure 2, le premier palier de rotation 8 est maintenu en position en appui contre une saillie circulaire 41 d'une première extrémité de l'arbre 4. Le premier palier de rotation 8 est ensuite maintenu autour de l'arbre 4 par exemple à l'aide d'un clip de fixation 13.

La deuxième roue dentée 3 est disposée de manière adjacente à la première roue dentée 2. Le diamètre extérieur, c'est-à-dire de l'anneau périphérique, des deux roues dentées est identique ou sensiblement identique, mais peut différer selon le besoin.

Le deuxième moyeu 7 comprend un premier secteur axial 71 et un deuxième secteur axial 72. A l'instar de la première portion axiale 61 et de la deuxième portion axiale 62 du premier moyeu 6 par rapport à la première roue dentée 2, le premier secteur axial 71 permet le maintien mécanique de la deuxième roue dentée 3. Le premier secteur axial 71 peut entourer partiellement la deuxième roue dentée 3 par le biais d'une extension. La fixation entre la deuxième roue dentée 3 et le premier secteur axial 71 du deuxième moyeu 7 peut par exemple se faire par soudage ou frettage mais toute fixation est envisageable tant que cette dernière ne nuit pas à la rotation de la première roue dentée 2 et du premier moyeu 6.

Le deuxième secteur axial 72 correspond au secteur du deuxième moyeu 7 s'étendant radialement au-delà de l'épaisseur formée par la deuxième roue dentée 3. Tout comme pour la deuxième portion axiale 62 du premier moyeu 6, le deuxième secteur axial 72 du deuxième moyeu 7 présente une longueur axiale suffisante pour assurer le maintien et garantir la stabilité en rotation de la deuxième roue dentée 3, notamment d'assurer qu'un axe de rotation de la deuxième roue dentée 3 reste confondu avec l'axe de rotation 100 de l'arbre 4. Ladite longueur axiale du deuxième moyeu 7 étant supérieure à la longueur axiale de la deuxième roue dentée 3.

La deuxième portion axiale 62 et le deuxième moyeu 7 sont au moins partiellement en regard radialement l'un par rapport à l'autre. L'espace entre les deux pièces suscitées est comblé par un deuxième palier de rotation 9. Le deuxième palier de rotation 9 est donc interposé entre le premier moyeu 6 et le deuxième moyeu 7. Pour améliorer la compacité du dispositif à double roues dentées 1, le premier moyeu 6 de la première roue dentée 2 est conformé pour porter le deuxième moyeu 7 de la deuxième roue dentée 3. Selon la figure 2, le deuxième moyeu 7 de la deuxième roue dentée 3 recouvre le premier moyeu 6 de la première roue dentée 2, notamment la deuxième portion axiale 62 dudit premier moyeu 6. Le deuxième palier de rotation 9 est ainsi disposé entre les deux moyeux correspondant à chacune des roues dentées. La deuxième roue dentée 3 est apte à tourner autour du premier moyeu 6 de la première roue dentée 2. Le deuxième palier de rotation 9 est distinct du premier palier de rotation 8.

Tout comme le premier palier de rotation 8, le deuxième palier de rotation 9 peut être un roulement à aiguilles ou à rouleaux. La structure et le fonctionnement du deuxième palier de rotation 9 sont identiques à ceux du premier palier de rotation 8. Comme cela a été décrit précédemment, une différence réside dans le fait que le deuxième palier de rotation 9, au lieu de prendre appui sur l'arbre 4, prend appui sur le premier moyeu 6, plus précisément sur une périphérie externe de sa deuxième portion axiale 62. La longueur axiale du deuxième secteur axial 72 du deuxième moyeu 7 permet d'assurer le maintien de la deuxième roue dentée 3 et de garantir un stabilité de fonctionnement de ladite roue dentée.

On comprend de ce qui précède que la deuxième portion axiale 62 du premier moyeu 6 est au moins partiellement interposée entre le premier palier de rotation 8 et le deuxième palier de rotation 9. Le dispositif à roue dentée 1 comprend également des moyens pour limiter le déplacement axial de la première roue dentée 2 ou de la deuxième roue dentée 3, par exemple via le premier moyeu 6 ou via le deuxième moyeu 7.

La deuxième roue dentée 3 peut ainsi tourner autour du premier moyeu 6.

Le premier moyeu 6 est posé sur une première butée axiale 10 qui est disposée entre l'arbre 4 et la deuxième portion axiale 62 et qui est juxtaposée au premier palier de rotation 8. La première butée axiale 10 peut par exemple être un roulement à billes sur lequel roule la deuxième portion axiale 62 du premier moyeu 6. La deuxième portion axiale 62 du premier moyeu 6 est donc en appui sur le premier palier de rotation 8, pour la reprise des efforts radiaux, et sur la première butée axiale 10, pour la reprise des efforts axiaux. De manière préférentielle, la première butée axiale 10 est configurée de sorte à ce que sa périphérie externe se situe radialement au même niveau que la bague externe du premier palier de rotation 8. Afin d'assurer une telle disposition, l'arbre 4 peut par exemple présenter un diamètre différent en fonction du positionnement du premier palier de rotation 8 et/ou de la première butée axiale 10.

La première butée axiale 10, en plus d'autoriser la rotation du premier moyeu 6 tout comme le premier palier de rotation 8, bloque tout déplacement axiale du premier moyeu 6 par rapport à l'arbre 4. A ce titre, la deuxième portion axiale 62, en particulier sa circonférence interne, peut comprendre un alésage permettant le logement de la première butée axiale 10 au niveau du premier moyeu 6.

Selon un mode de réalisation, le dispositif à double roues dentées 1 comprend également une deuxième butée axiale 11 qui est identique à la première butée axiale 10 tant sur le plan structurel que fonctionnel, puisque ladite deuxième butée axiale 11 garantit le blocage axial du deuxième moyeu 7 par rapport à l'arbre 4.

Selon un autre mode de réalisation non présenté, la deuxième butée axiale 11 peut garantir le blocage axial du deuxième moyeu 7 par rapport au premier moyeu 6.

Afin que les butées axiales puissent assurer leur fonction de maintien mécanique des moyeux, les butées axiales doivent-elles même être maintenues mécaniquement. À ce titre, le dispositif à double roues dentées 1 comprend notamment une bague 12 ainsi qu'une pluralité de clips de fixation 13.

La bague 12 est emmanchée autour de l'arbre 4 et est interposée entre la première butée axiale 10 et la deuxième butée axiale 11. La bague 12 permet ainsi aux butées axiales de conserver une distance l'une par rapport à l'autre équivalent à une dimension de la bague 12.

Les clips de fixation 13 sont circulaires et s'étendent autour de l'arbre 4. Leur fonction est de venir bloquer chacune des butées axiales afin que ces dernières demeurent axialement immobiles et assurent la fonction de butée des moyeux. Les clips de fixation 13 peuvent être montés au sein d'une gorge ou d'un alésage des pièces recevant chacun desdits clips de fixation 13. Lesdites pièces concernées peuvent par exemple être l'arbre 4, la deuxième portion axiale 62 du premier moyeu 6 ou le deuxième secteur axial 72 du deuxième moyeu 7.

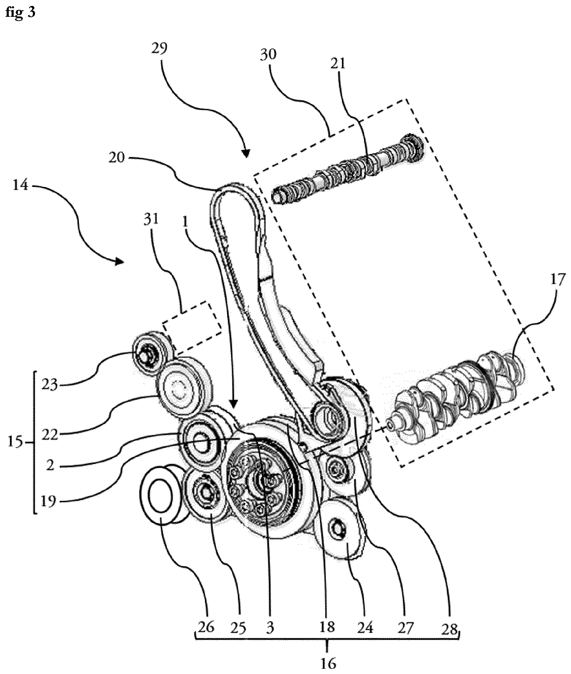

Le figure 3 représente symboliquement un groupe motopropulseur 14 au sein duquel est intégré le dispositif à double roues dentées 1. Le groupe motopropulseur 14 comprend donc un moteur thermique 30 et une machine électrique 31, représentés en pointillés de manière schématique. La machine électrique 31 est notamment apte à entraîner une première cascade 15 de roues dentées.

Selon un exemple de réalisation illustré sur la figure 3, la machine électrique 31 peut être un alterno-démarreur destiné à mettre en fonctionnement le moteur thermique 30 ainsi qu'à produire de l'énergie, par exemple dans le but de recharger la batterie du véhicule.

Selon un exemple alternatif de réalisation non représenté, le groupe motopropulseur 14 peut être un groupe motopropulseur 14 hybride. Auquel cas, la machine électrique 31 correspond à un moteur électrique pouvant être destiné à assurer la propulsion du véhicule avec ou sans l'assistance du moteur thermique 30.

Le moteur thermique 30 comprend un vilebrequin 17 et un arbre à cames 21. Le vilebrequin 17 et l'arbres à came 21 sont mis en mouvement de manière phasée l'un par rapport à l'autre. Le vilebrequin 17 entraîne un mouvement des pistons du moteur thermique 30 tandis que l'arbre à cames 21 entraîne un mouvement des soupapes du moteur thermique 30, les pistons et les soupapes devant être synchronisées entre elles.

Afin de garantir cette synchronisation, le vilebrequin 17 et l'arbre à cames 21 sont reliés l'un à l'autre de manière indirecte, par le biais d'une deuxième cascade 16 de roues dentées et éventuellement par un élément de transmission tel une chaîne de distribution. On comprend ainsi que la première cascade 15 de roues dentées est relative à la machine électrique 31 tandis que la deuxième cascade 16 de roues dentées est relative au moteur thermique 30. Autrement dit, la première cascade 15 de roues dentées transfère un effort généré par la machine électrique 31 jusqu'au vilebrequin 17 et permet ainsi d'initier la mise en fonctionnement du moteur thermique 30 par mise en rotation du vilebrequin 17. La deuxième cascade 16 de roues dentées permet quant à elle de commander la rotation de plusieurs composants du moteur thermique 30 qui seront présentés en détails par la suite.

Tel que cela est visible sur la figure 3, le dispositif à double roues dentées 1 est intégré à deux cascades 15, 16 de roues dentées, la première roue dentée 2 faisant partie de la première cascade 15 de roues dentées alors que la deuxième roue dentée 3 faisant partie de la deuxième cascade 16 de roues dentées.

Ainsi, avec ce dispositif à double roues dentées 1, on peut organiser deux cascades 15, 16de roues dentées selon par exemple les fonctions des accessoires du moteur thermique.

Les deux cascades 15, 16 de roues dentées peuvent avoir des régimes légèrement différents.

La première cascade 15 de roues dentées permet l'entrainement par le vilebrequin 17 d'accessoires tels qu'une pompe à eau, par exemple via un engrenage de pompage 22, et de la machine électrique 31, par exemple via un engrenage de transmission électrique 23.

La deuxième cascade 16 de roues dentées permet l'entrainement par le vilebrequin 17 d'accessoires du moteur thermique 30 tels qu'une roue dentée d'un compresseur de climatisation 26.

L'ensemble des fonctionnalités de la première cascade 15 de roues dentées et de la deuxième cascade 16 de roues dentées présenté sur la figure 3 est donné à titre d'exemple non exhaustif.

La première cascade 15 de roues dentées peut être légèrement décalée de la seconde cascade 16 de roues dentées, la première roue dentée 2 et la deuxième roue dentée 3 pouvant tourner indépendamment l'une de l'autre.

Les paliers de rotation du dispositif à doubles roues dentées 1 entrainent de très faibles frottements voire nuls, ledit dispositif à double roues dentées 1 ne génère donc pas de consommation d'énergie.

L'arbre autour duquel est mis en place le dispositif à double roues dentées 1 pourra être enfoncé par l'extrémité libre opposée à la première extrémité dans le carter du moteur thermique 30.

Le vilebrequin 17 est relié à une poulie de vilebrequin 18 qui fait partie de la deuxième cascade 16 de roues dentées. La poulie de vilebrequin 18 est entraînée en rotation par le vilebrequin 17, ce qui entraîne la rotation de l'ensemble de la deuxième cascade 16 de roues dentées. Selon l'exemple de la figure 3, la poulie de vilebrequin 18 est directement en prise sur la deuxième roue dentée 3, sur une première roue dentée d'équilibrage 24 et sur une roue dentée intermédiaire 27.

La roue dentée intermédiaire 27, lorsqu'elle est entraînée en rotation par la poulie de vilebrequin 18, entraîne à son tour en rotation une roue dentée de distribution 28. Cette dernière comprend un pignon autour duquel est disposée une chaîne ou une courroie de distribution 20. La chaîne de distribution 20 est ainsi mise en mouvement par la roue dentée de distribution 28. La chaîne de distribution 20 s'étend jusqu'à l'arbre à cames 21 et entraîne la mise en rotation de ce dernier. Le vilebrequin 17 et l'arbre à cames 21 sont ainsi en phase grâce à la transmission de mouvement partant du vilebrequin 17 jusqu'à la poulie de vilebrequin 18, puis par le biais de la roue dentée intermédiaire 27, de la roue dentée de distribution 28 et de la chaîne de distribution 20.

L'ensemble incluant la chaîne de distribution 20 et l'arbre à cames 21 est un organe de distribution 29. Ce dernier est relié au vilebrequin 17 par l'intermédiaire de la deuxième cascade 16 de roues dentées. Cette dernière permet donc de maintenir le vilebrequin 17 et l'arbre à cames 21 strictement en phase l'un par rapport à l'autre sans aucune tolérance de déphasage en rotation.

La poulie de vilebrequin 18 entraîne également en rotation la deuxième roue dentée 3 du dispositif à double roues dentées 1. La deuxième roue dentée 3, entraînée par la poulie de vilebrequin 18, entraîne à son tour une deuxième roue dentée d'équilibrage 25, cette dernière entraînant la roue dentée du compresseur de climatisation 26 évoquée précédemment.

La roue dentée de compresseur de climatisation 26, lorsqu'elle est mise en rotation, permet le fonctionnement d'un compresseur de climatisation, et ce par exemple dans le but de chauffer ou de refroidir l'habitacle du véhicule, en coopération avec un système de ventilation de l'habitacle du véhicule. L'ensemble des fonctionnalités de la deuxième cascade 16 de roues dentées présenté sur la figure 3 est non exhaustif.

La première cascade 15 de roues dentées se compose notamment d'un engrenage principal 19, positionné de manière axiale à la poulie de vilebrequin 18. Ce dernier et l'engrenage principal 19 sont solidaires en rotation l'un par rapport à l'autre. Ainsi lorsque la poulie de vilebrequin 18 tourne, elle entraîne en rotation l'engrenage principal 19 à la même vitesse.

L'engrenage principal 19 est directement en prise sur la première roue dentée 2. Cette dernière est liée à l'engrenage de pompage 22 et à l'engrenage de transmission électrique 23 évoqués précédemment. L'engrenage de pompage 22 permet d'activer une pompe à eau qui met en circulation un liquide caloporteur de manière à refroidir le moteur thermique 30. L'engrenage de transmission électrique 23 est directement relié à la machine électrique 31.

La transmission des forces générées par la machine électrique 31 ou reçues par la machine électrique 31 se fait par la première cascade 15 de roues dentées, en partant de l'engrenage de transmission électrique 23 vers l'engrenage principal 19 quand la machine électrique 31 joue le rôle de démarreur pour le moteur thermique, ou de l'engrenage principal 19 à l'engrenage de transmission électrique 23, quand la machine électrique 31 est utilisée en tant qu'alternateur.

Lorsque la machine électrique 31 assure la fonction de démarreur, la force naît au niveau de la machine électrique 31 et transite de l'engrenage de transmission électrique 23 à l'engrenage principal 19 via la première cascade 15 de roues dentées. L'engrenage principal 19 entraîne donc en rotation la poulie de vilebrequin 18 et le vilebrequin 17 afin de mettre en route le moteur thermique 30.

Une fois que le moteur thermique 30 est en fonctionnement, le vilebrequin 17 fourni son effort aux roues du véhicule via une transmission qui équipe le véhicule. Le vilebrequin 17 entraîne également la poulie de vilebrequin 18, qui entraîne à son tour l'engrenage principal 19. Une force transite ainsi de l'engrenage principal 19 à l'engrenage de transmission électrique 23 via la première cascade 15 de roues dentées, une telle force étant dédiée à l'utilisation de la machine électrique 31 en tant qu'alternateur.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un dispositif à double roues dentées, comprenant deux roues dentées, chacune des roues dentées étant intégrée au sein de sa propre cascade de roues dentées d'un groupe motopropulseur. Des variantes non décrites ici pourraient être mises en œuvre sans sortir du contexte de l'invention, dès lors qu'elles comprennent un dispositif à double roues dentées conforme à l'invention.

## Revendications

1. Dispositif à double roues dentées (1) pour groupe motopropulseur (14) de véhicule, comprenant une première roue dentée (2) et une deuxième roue dentée (3), la première roue dentée (2) et la deuxième roue dentée (3) étant respectivement montées sur un premier moyeu (6) et sur un deuxième moyeu (7), le premier moyeu (6) et le deuxième moyeu (7) étant mobiles en rotation autour d'un même axe de rotation (100), le dispositif à double roues dentées (1) comprenant un arbre (4) et au moins un premier palier de rotation (8) interposé entre le premier moyeu (6) et l'arbre (4), le dispositif à double roues dentées (1) comprenant au moins un deuxième palier de rotation (9) distinct du premier palier de rotation (8) et interposé entre le premier moyeu (6) et le deuxième moyeu (7) de sorte que le deuxième moyeu (7) soit mobile en rotation par rapport au premier moyeu (6), la première roue dentée (2) et la deuxième roue dentée (3) étant configurées pour être entraînées en rotation indépendamment l'une de l'autre; **caractérisé en ce que** le premier moyeu (6) est pourvu d'une première portion axiale (61) portant la première roue dentée (2) et d'une deuxième portion axiale (62) porteuse du deuxième moyeu (7); la deuxième portion axiale (62) du premier moyeu étant au moins partiellement interposée entre le premier palier de rotation (8) et le deuxième palier de rotation (9).

2. Dispositif à double roues dentées (1) selon la revendication 1, comprenant une première butée axiale (10) disposée entre le premier moyeu (6) et l'arbre (4).

3. Dispositif à double roues dentées (1) selon la revendication précédente, dans lequel le deuxième moyeu (7) comprend un premier secteur axial (71) portant la deuxième roue dentée (3) et un deuxième secteur axial (72) en butée axiale contre l'arbre (4) par l'intermédiaire d'une deuxième butée axiale (11).

4. Dispositif à double roues dentées (1) selon la revendication 2 ou 3, dans lequel la première butée axiale (10) et/ou la deuxième butée axiale (11) est un roulement à billes.

5. Dispositif à double roues dentées (1) selon l'une quelconque des revendications précédentes, dans lequel le premier palier de rotation (8) et/ou le deuxième palier de rotation (9) est un roulement à aiguilles ou à rouleaux.

6. Dispositif à double roues dentées (1) selon l'une quelconque des revendications précédentes, dans lequel les diamètres de la première roue dentée (2) et de la deuxième roue dentée (3) sont identiques à +/- 2%.

7. Groupe motopropulseur (14) d'un véhicule, comprenant une machine électrique (31) et un moteur thermique (30), le moteur thermique (30) comprenant au moins un vilebrequin (17), le groupe motopropulseur (14) comprenant une première cascade (15) de roues dentées reliant la machine électrique (31) au vilebrequin (19) et une deuxième cascade (16) de roues dentées reliant au moins un organe de distribution (29) au vilebrequin (19), **caractérisé en ce qu'**il comprend un dispositif à double roues dentées (1) selon l'une quelconque des revendications précédentes, ledit dispositif à double roues dentées (1) étant constitutif de la première cascade (15) de roues dentées et de la deuxième cascade (16) de roues dentées.

8. Groupe motopropulseur (14) selon la revendication précédente, dans lequel la machine électrique (31) est un démarreur et/ou un alternateur du moteur thermique (30).

9. Groupe motopropulseur (14) selon la revendication 7 ou 8, dans lequel le dispositif à double roues dentées (1) autorise un décalage de vitesse de rotation entre la première cascade (15) de roues dentées et la deuxième cascade (16) de roues dentées.

## Patentansprüche

1. Vorrichtung mit doppelten Zahnrädern (1) für einen Antriebsstrang (14) eines Fahrzeugs, umfassend ein erstes Zahnrad (2) und ein zweites Zahnrad (3), wobei das erste Zahnrad (2) und das zweite Zahnrad (3) jeweils auf einer ersten Nabe (6) und einer zweiten Nabe (7) montiert sind, wobei die erste Nabe (6) und die zweite Nabe (7) um eine gleiche Drehachse (100) drehbeweglich sind, wobei die Vorrichtung mit doppelten Zahnrädern (1) eine Welle (4) und mindestens ein erstes Drehlager (8) umfasst, das zwischen der ersten Nabe (6) und der Welle (4) eingesetzt ist, wobei die Vorrichtung mit doppelten Zahnrädern (1) mindestens ein zweites Drehlager (9) umfasst, das sich vom ersten Drehlager (8) unterscheidet und zwischen der ersten Nabe (6) und der zweiten Nabe (7) eingesetzt ist, sodass die zweite Nabe (7) in Bezug zur ersten Nabe (6) drehbeweglich ist, wobei das erste Zahnrad (2) und das zweite Zahnrad (3) konfiguriert sind, um unabhängig voneinander in Drehung angetrieben zu werden; **dadurch gekennzeichnet, dass** die erste Nabe (6) mit einem ersten axialen Abschnitt (61), der das erste Zahnrad (2) trägt, und einem zweiten axialen Abschnitt (62) als Träger der zweiten Nabe (7) versehen ist; wobei der zweite axiale Abschnitt (62) der ersten Nabe mindestens teilweise zwischen dem ersten Drehlager (8) und dem zweiten Drehlager (9) eingesetzt ist.

2. Vorrichtung mit doppelten Zahnrädern (1) nach Anspruch 1, umfassend einen ersten axialen Anschlag (10), der zwischen der ersten Nabe (6) und der Welle (4) angeordnet ist.

3. Vorrichtung mit doppelten Zahnrädern (1) nach dem vorstehenden Anspruch, wobei die zweite Nabe (7) einen ersten axialen Sektor (71), der das zweite Zahnrad (3) trägt, und einen zweiten axialen Sektor (72) umfasst, der über einen zweiten axialen Anschlag (11) in axialem Anschlag an der Welle (4) anliegt.

4. Vorrichtung mit doppelten Zahnrädern (1) nach Anspruch 2 oder 3, wobei der erste axiale Anschlag (10) und/oder der zweite axiale Anschlag (11) ein Kugellager ist.

5. Vorrichtung mit doppelten Zahnrädern (1) nach einem der vorstehenden Ansprüche, wobei das erste Drehlager (8) und/oder das zweite Drehlager (9) ein Nadel- oder Rollenlager ist.

6. Vorrichtung mit doppelten Zahnrädern (1) nach einem der vorstehenden Ansprüche, wobei die Durchmesser des ersten Zahnrads (2) und des zweiten Zahnrads (3) auf +/- 2% identisch sind.

7. Antriebsstrang (14) eines Fahrzeugs, umfassend eine elektrische Maschine (31) und einen Verbrennungsmotor (30), wobei der Verbrennungsmotor (30) mindestens eine Kurbelwelle (17) umfasst, der Antriebsstrang (14) eine erste Kaskade (15) von Zahnrädern, welche die elektrische Maschine (31) mit der Kurbelwelle (19) verbindet, und eine zweite Kaskade (16) von Zahnrädern umfasst, die mindestens ein Verteilungsorgan (29) mit der Kurbelwelle (19) verbindet, **dadurch gekennzeichnet, dass** er eine Vorrichtung mit doppelten Zahnrädern (1) nach einem der vorstehenden Ansprüche umfasst, wobei die Vorrichtung mit doppelten Zahnrädern (1) aus der ersten Kaskade (15) von Zahnrädern und der zweiten Kaskade (16) von Zahnrädern besteht.

8. Antriebsstrang (14) nach dem vorstehenden Anspruch, wobei die elektrische Maschine (31) ein Anlasser und/oder eine Lichtmaschine des Verbrennungsmotors (30) ist.

9. Antriebsstrang (14) nach Anspruch 7 oder 8, wobei die Vorrichtung mit doppelten Zahnrädern (1) einen Drehzahlversatz zwischen der ersten Kaskade (15) von Zahnrädern und der zweiten Kaskade (16) von Zahnrädern zulässt.

## Claims

1. A device (1) with double toothed wheel for a vehicle power train (14), comprising a first toothed wheel (2) and a second toothed wheel (3), wherein the first toothed wheel (2) and the second toothed wheel (3) are respectively mounted on a first hub (6) and on a second hub (7), the first hub (6) and the second hub (7) being rotatable about the same axis of rotation (100), the device (1) with double toothed wheel further comprising a shaft (4) and at least one first rotational bearing (8) positioned between the first hub (6) and the shaft (4), the device (1) with double toothed wheel further comprising at least one second rotational bearing (9) distinct from the first rotational bearing (8) and positioned between the first hub (6) and the second hub (7) so that the second hub (7) is rotatable relative to the first hub (6), the first toothed wheel (2) and the second toothed wheel (3) being configured to be driven in rotation independently of one another, **characterized in that** the first hub (6) is provided with a first axial portion (61) carrying the first toothed wheel (2) and a second axial portion (62) carrying the second hub (7), the second axial portion (62) of the first hub being at least partially positioned between the first rotational bearing (8) and the second rotational bearing (9).

2. The device (1) with double toothed wheel according to claim 1, comprising a first axial stop (10) arranged between the first hub (6) and the shaft (4).

3. The device (1) with double toothed wheel according to the preceding claim, wherein the second hub (7) comprises a first axial sector (71) carrying the second toothed wheel (3) and a second axial sector (72) axially abutting against the shaft (4) via a second axial stop (11).

4. The device (1) with double toothed wheel according to claim 2 or 3, wherein the first axial stop (10) and/or the second axial stop (11) is a ball bearing.

5. The device (1) with double toothed wheel according to any of the preceding claims, wherein the first rotational bearing (8) and/or the second rotational bearing (9) is a needle or a roller bearing.

6. The device (1) with double toothed wheel according to any of the preceding claims, wherein the diameters of the first toothed wheel (2) and the second toothed wheel (3) are identical to within +/- 2%.

7. A power train (14) of a vehicle, comprising an electric machine (31) and an internal combustion engine (30), the internal combustion engine (30) comprising at least one crankshaft (17), the power train (14) comprising a first cascade (15) of toothed wheels connecting the electric machine (31) to the crankshaft (19), and a second cascade (16) of toothed wheels connecting at least one distribution member (29) to the crankshaft (19), **characterized in that** it comprises a device (1) with double toothed wheel according to any of the preceding claims, said device (1) with double toothed wheel forming the first cascade (15) of toothed wheels and the second cascade (16) of toothed wheels.

8. The power train (14) according to the preceding claim, wherein the electric machine (31) is a starter and/or an alternator of the internal combustion engine (30).

9. The power train (14) according to claim 7 or 8, wherein the device (1) with double toothed wheel allows a rotational speed offset between the first cascade (15) of toothed wheels and the second cascade (16) of toothed wheels.
